# EUROPEAN PATENT APPLICATION

(11) **EP 3 144 827 A1**
(43) Date of publication of application: **22.03.2017**
(21) Application number: 15306452.2
(22) Date of filing: 17.09.2015
(51) Int. Cl.: G06F 17/30, H04L 29/08

(54) **A DEVICE FOR IDENTIFYING ORGANIZATIONS AND MONITORING ORGANIZATION'S WEBSITE ACTIVITY FROM VISIT LOGS**

(71) Applicant: Azalead Software, 75008 Paris (FR)
(72) Inventor: LE JARIEL DES CHATELETS, Laurent, 75008 PARIS (FR); HEYS, Nick, 75008 PARIS (FR)
(74) Representative: Loyer & Abello

(57) **Abstract**

The invention namely provides a web activity monitoring device (300) for generating visit logs of organizations, comprising:
• a matching data repository in which is stored:
∘ a set of organization identifiers (304),
o a set of browser identifiers (303),
o a browser association, wherein the browser association links a browser identifier to an organization identifier,
• an input interface configured to:
∘ receive a request (307) from a web client device (306), wherein the request comprises a browser identifier of the request,
• an organization identifying module (301) configured to:
∘ retrieve the organization identifier from the browser identifier, and
• a visit logging module (305) comprising:
∘ a clock configured to retrieve a date when the request is received, and
∘ a visit history repository storing the retrieved date in association with the retrieved organization identifier,
• an output interface for accessing the history of the visits.

## Description

### Field of the invention

The invention relates to a web activity monitoring device for generating visit logs of organizations.

### Background

US2011106920 discloses a computer-implemented method for associating an organizational entity with a network address.

### Summary

An idea at the basis of the invention is to provide a system for generating visit logs of visiting organizations on a monitored website.

An aspect of the invention is to allow identifying a communication device of a visiting organization even if the communication device is not registered or even if the IP address of the communication device changes.

In an embodiment, the invention provides a web activity monitoring device for generating visit logs of organizations on a monitored website having a webpage, the web monitoring device comprising:
- a matching data repository in which is stored:
   o a set of organization identifiers,
   o a set of browser identifiers,
   o a browser association, wherein the browser association links a browser identifier to an organization identifier,
- an input interface configured to:
   o receive a request from a web client device, wherein the request comprises a browser identifier and a destination webpage of the request,
- an organization identifying module configured to:
   o retrieve from the matching data repository a browser association, wherein the browser association links the browser identifier of the web client device to an organization identifier,
   o retrieve the organization identifier,
- a visit logging module comprising:
   o a clock configured to retrieve a visiting date when the request is received, and
   o a visit history repository, the visit logging module being configured to store the retrieved visiting date and the destination webpage of the request in association with the retrieved organization identifier in the visit history repository in order to generate history of the visits of an organization on the destination webpage,
- an output interface for accessing the history of the visits.

Thanks to these features, the monitored website can access to the history of the visits of organizations on its webpages.

According to embodiments, such a web activity monitoring device may comprise one or more of the features below.

In an embodiment, the monitored website comprises a plurality of webpages and the visit logging module is further configured to, when the input interface receives a request:
- increment a counter of visits of the organization identifier on the destination webpage, and
- increment a counter of visited webpages of the website for the organization identifier.

In an embodiment, the visit logging module is further configured to:
- retrieve a first visiting date associated to a first destination webpage in the visit history repository,
- retrieve a second visiting date associated to a second destination webpage in the visit history repository,
- calculate a delay between the first visiting date and the second visiting date, and
- store the delay in the visit history repository in association with the first destination webpage.

There are different manners of identifying a browser in a more or less unique way. In an embodiment, the browser identifier is a browser fingerprint comprising an element or a combination of elements in the group consisting of:
o a browser version,
o an operating system version,
o a language setup,
o a time zone setup,
o a font setup,
o a plugin setup,
o a platform version,
o a cookies allowance setup,
o a screen resolution setup.

In an embodiment, the request is a hypertext transfer protocol (HTTP) request whose header comprises the browser fingerprint.

In an alternative embodiment, the browser identifier is a cookie identifier, the request comprises a cookie comprising the cookie identifier, and the browser association is a cookie association, the cookie association linking the cookie identifier to the organization identifier, and:
- the matching data repository further stores:
   o a set of network addresses,
   o a plurality of network associations, an network association being a link between an organization identifier and an network address,
- the web activity monitoring device further comprising a web server configured to perform operations comprising:
   o receiving a request from a web client device, wherein the request comprises a source network address,
   o retrieving the network address in the matching data repository, then
   o sending a cookie to the web client device, wherein the cookie comprises a cookie identifier,
   o retrieving from the matching data repository an network association, wherein the network association links the network address of the web client device to an organization identifier, and
   o retrieving the organization identifier,
   o further storing in the matching data repository the cookie identifier,
   o generating a cookie association, wherein the cookie association links the cookie identifier to the organization identifier for creating associations between cookie identifiers and organization identifiers.

Thanks to these features, a web client device of a visiting organization can be identified regardless of the network localization of the web client device when the web client device visits a webpage of a monitored website.

In an embodiment, the request is a hypertext transfer protocol (HTTP) request whose header comprises the cookie. In an embodiment, the network address is an Internet Protocol (IP) address, the network association is an IP association.

In an embodiment, the web activity monitoring device further comprises a matching module comprising:
- an input interface configured to receive a request from a web client device, wherein the request comprises an network address of the web client device,
- an output interface for sending a request for external content in relation with the web client device, wherein the input interface of the matching module is further configured to receive a response comprising the external content, and
- an association processor module configured to:
   o determine a candidate organization identifier as a function of the external content,
   o generate an network association, the network association being a link between the candidate organization identifier and the network address,
   o store in the matching data repository the network address of the web client device, the candidate organization identifier and the network association.

In an embodiment, the request from the web client device is a hypertext transfer protocol (HTTP) request whose header comprises the network address which is a source IP address, and the network association is an IP association.

In an embodiment, the external content is an element or a combination of elements selected in the group consisting of:
- an organization name from an network registry in which are stored organization names in relation with corresponding network addresses,
- a date when receiving the request from the web client device,
- a geographical localization attached with the network address of the web client device,
- a record of an interaction with an email, wherein the network address from which the email was received is the network address of the web client device,
- a domain name attached with the network address of the web client device,
- character strings inputted in a webform on a web site,
- a tracking pixel interaction on a web site,
- a configuration of a web client device, wherein the configuration of the web client device comprises an element or a combination of elements in the group consisting of:
   o a browser version,
   o a operating system version,
   o a language setup,
   o a time zone setup,
   o a font setup,
   o a plugin setup,
   o a platform version,
   o a cookies use setup,
   o a screen resolution setup.

In an embodiment, the external content is stored in the matching data repository in association with the candidate organization identifier.

In an embodiment, the external content is a combination of elements, wherein each element has a value selected between different values such that the external content related to the request is a n-tuple of values,

the association processor module is further configured to operate a classification tree algorithm, the classification tree algorithm being configured to predict for a n-tuple of values a probability of association of the browser identifier with the candidate organization identifier.

In an embodiment, the probability is calculated as a function of external content associated to a plurality of browser identifiers in order to determine schemes of association of any browser identifier with any candidate organization identifier.

In an embodiment, the web activity monitoring device further comprises a scoring module configured to:
- generate an network score for the network association as a function of the probability,
- store in the matching data repository the generated network score, wherein the network score quantifies the reliability of the network association.

In an embodiment, the function of the external content in order to determine the candidate organization identifier is a machine learning function and/or a "big data" analysis function.

In an embodiment, the network score for the network association is a function of reliability weights, wherein a reliability weight is a function of the reliability of correlation of an external content..

In an embodiment, the network score is an IP score.

In an embodiment, the web server is further configured to send the cookie to the web client device when the network score is above a threshold.

In an embodiment, the reliability of the network association is further analyzed by a machine learning function taking into account the history of the visits of an organization in correlation with the external content associated to the candidate organization identifier, in order to modify the network score. Thanks to these features, the use of cookies further enables to cross check or correlate information from various sources in order to increase the reliability of the network scores.

In an embodiment, the web activity monitoring device is further configured to:
o generate a cookie score for the cookie association, as a function of the reliability of the cookie association,
o store in the matching data repository the generated cookie score,
o access the cookie score in the matching data repository, and
o further analyze the reliability of the cookie association by a machine learning function taking into account the history of the visits of an organization in correlation with the external content associated to the candidate organization identifier, in order to modify the cookie score.

In an embodiment, the organization identifier is selected in the group consisting of:
o a corporate name of a company,
o a legal name of a company,
o a registered name of a company,
o a registered number of a company,
o a trademark,
o a name of a society,
o a name of an organization,
o a name of an administration entity.

In an embodiment, the invention provides a computer-implemented method for generating visit logs of organizations on a webpage hosted in a web server, comprising:
o receiving from a web client device a request comprising a browser identifier and a destination webpage of the request,
o retrieving from a matching data repository a browser association, wherein the browser association links the browser identifier of the web client device to an organization identifier,
o retrieving the organization identifier,
o retrieving from a clock a date when the request is received, and
o storing in a visit history repository the retrieved date and the destination webpage of the request in association with the retrieved organization identifier in order to generate history of the visits of an organization on the destination webpage.

In an embodiment, the request comprises a cookie comprising the browser identifier, the browser identifier being a cookie identifier, and the browser association being a cookie association, wherein the cookie association links a cookie identifier to an organization identifier, the method further comprising :
o sending to a web server an instruction for generating a cookie comprising a cookie identifier when the web server receives a request from a web client device, wherein the request comprises an network address of the web client device,
o receiving from the web server the network address of the web client device,
o retrieving the network address in the matching data repository, then
o sending to the web server an instruction for sending the cookie to the web client device,
o retrieving from the matching data repository an network association, wherein the network association links the network address of the web client device to an organization identifier, and retrieving the organization identifier,
o storing in the matching data repository the cookie identifier, and generating a cookie association, wherein the cookie association links the cookie identifier to the organization identifier.

In an embodiment, the invention also provides a computer program comprising computer-executable instructions that perform the above-mentioned method when executed, and a computer that comprises said computer program.

### Brief description of the drawings

These and other aspects of the invention will be apparent from and elucidated with reference to the embodiments described hereinafter, by way of example, with reference to the drawings.
- Figure 1 is an interface display of a visits history of a plurality of visiting company on the monitored website of a monitored company;
- Figure 2 is an interface display of a detailed visits history of a single visiting company on the monitored website of a monitored company;
- Figure 3 schematically illustrates a web activity monitoring device according to an embodiment;
- Figure 4 schematically illustrates a matching module for generating association between IP addresses or cookies addresses and companies identifiers;
- Figure 5 schematically illustrates a plurality of visiting communication devices on a plurality of monitored websites handled by the web activity monitoring device;
- Figure 6 schematically illustrates a computing device;
- Figure 7 schematically illustrates the generation of an algorithm for scoring associations of source IP addresses and identifiers of visiting companies;
- Figure 8 represents a very simple decision tree algorithm as generated by the steps described on Figure 7;
- Figure 9 represents a more complex decision tree algorithm as generated by the steps described on Figure 7.

### Detailed description of the embodiments

In an embodiment, the invention provides an application for generating visit logs of visitors on the monitored website of a company.

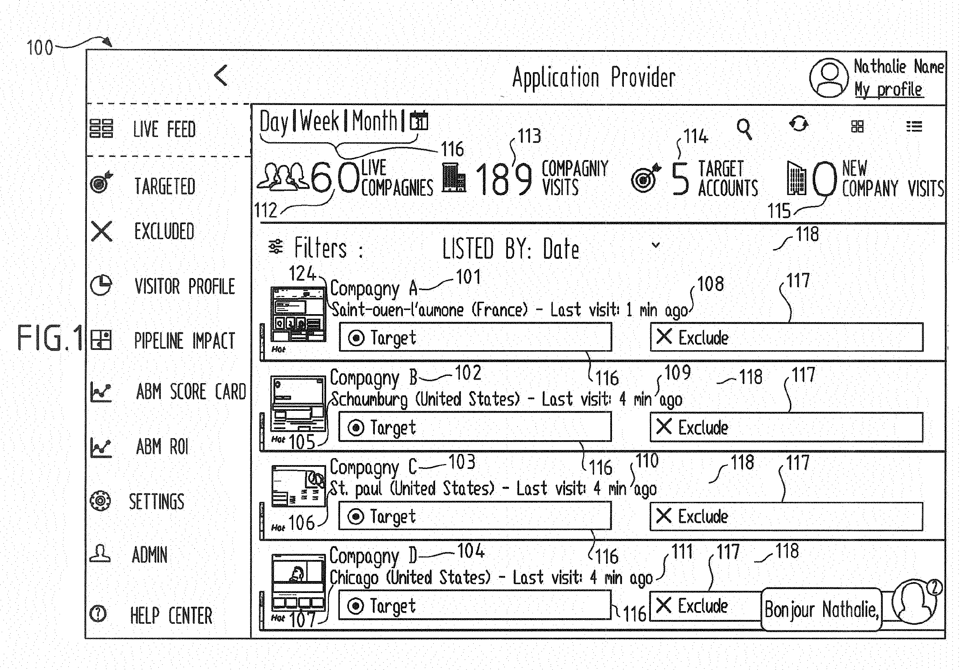

Figure 1 illustrates an interface display 100 for enabling a monitored company to access the visit log of visiting companies on the monitored website of the monitored company. A visitor from a visiting company uses a visiting communication device for sending a request to a web server in order to get back a website page of the monitored website of the company. The request is registered as a visit and the visiting communication device from the visiting company is identified in order to generate the visit log of the monitored website for each visiting company.

For example, on Figure 1, a list of names of visiting companies is displayed on predefined boxes 101, 102, 103 and 104: Company A, Company B, Company C, and Company D. For each visiting company, a corresponding location is also displayed in a predefined box 124, 105, 106 and 107. Moreover, for each visiting company, the last visit date or delay is also displayed in a predefined box 108, 109, 110 and 111. For example, a visitor of the Company D, from Chicago, have been connected to the monitored website 4 minutes ago.

The interface display has a number of functionalities for enabling the monitored company to select relevant information about visit log. For example, the number of visiting companies visiting the website in the last hour is displayed on a box 112, the total number of visiting companies visiting the website per day is displayed on a box 113, the number of first time visiting companies per day is displayed on a box 115. Relevant visiting companies may be saved by clicking on buttons 116 or excluded by clicking on button 117. The number of relevant selected visiting companies per day is displayed on a box 114. A setting button 116 enables to select all the previous information to be displayed on a per-day basis or a per-week basis or on a per-month basis.

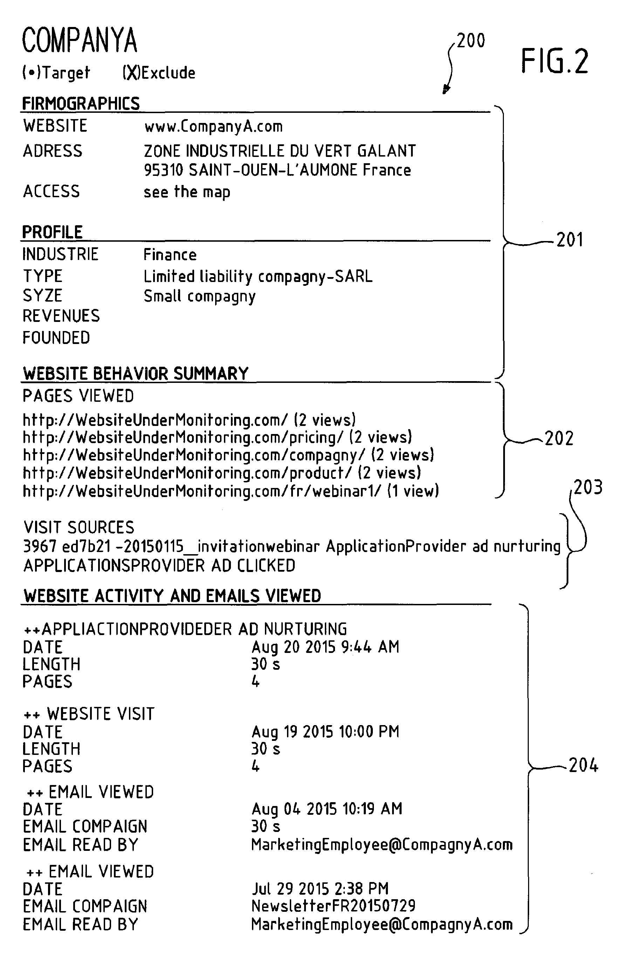

A zoom button 118 is also provided, in order to open a window on which a visit log of a visiting company is displayed in detail, as it will be further described with reference to Figure 2.

Other functionalities are available, which are not described.

Figure 2 represents a display 200 of a visit log of the visiting company whose name is Company A. The display comprises the following fields:
- field 201 comprises information about the visiting company, for example the website address of the website of the visiting company and the geographical location of the visiting company,
- field 202 comprises details about the number of visits of the webpages of the monitored website,
- field 203 comprises information about the source of the visits,
- field 204 comprises details about the time spent on the webpages and on the email campaigns.

The visit logs enable to efficiently target companies in marketing campaigns. For example, a visiting company which has visited a few times a pricing webpage on the monitored website is likely to answer positively to a call of a marketing employee of the company of the monitored website.

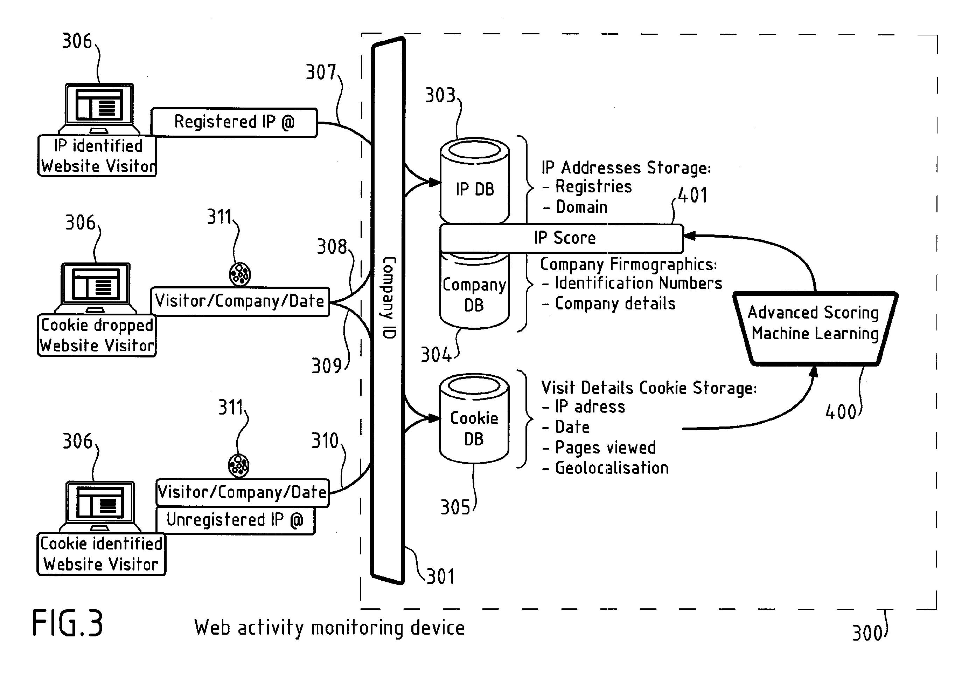

Now, with reference to Figure 3, a web activity monitoring device 300 for generating such visit logs will now be described.

The web activity monitoring device 300 comprises a Company ID module 301 configured to:
1/ firstly, identify which visiting company is connected to a webpage of a monitored website, and
2/ secondly, save the visit details such as the date, viewed webpages, geolocalization etc. in association with the company identifier in order to generate history of the visits of the visiting company on the monitored website.

The web activity monitoring device 300 also comprises three databases as follows:
- an IP database 303 for storing IP addresses,
- a Company database 304 for storing company identifiers and information about companies,
- and a cookie database 305 for storing cookies identifiers and associated visit details.

The Company ID module 301 is connected to all the databases in order to:
- use the information stored in the databases 303, 304 and 305 for identifying which visiting company is connected to a webpage of a monitored website, and.
- store information in the databases for saving the visit details such as the date, viewed webpages, geolocalization etc. in association with the company identifier, in order to further identify the visiting companies and generate visit logs.

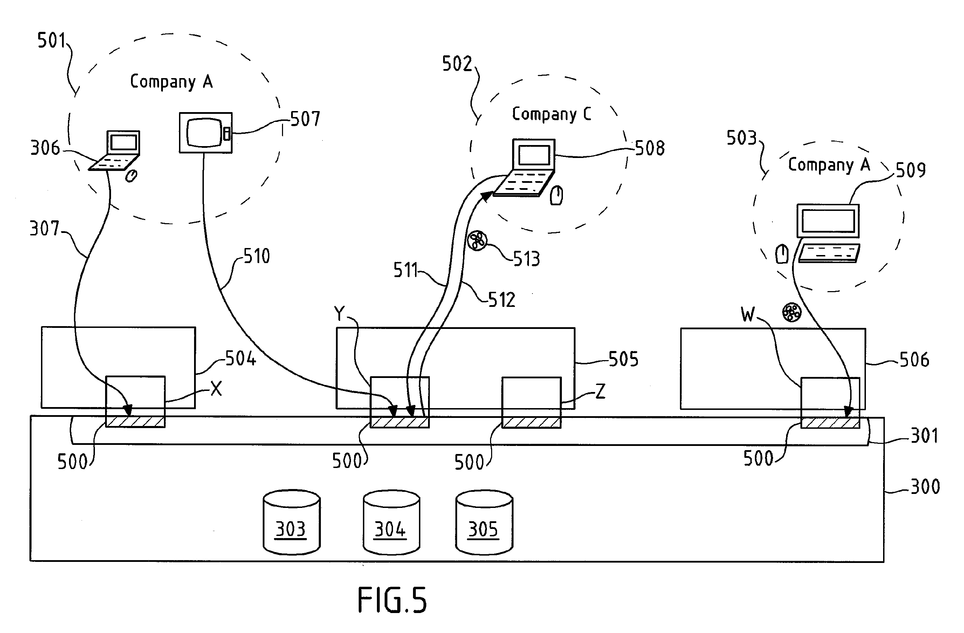

The Company ID module 301 is connected to, or is part of, a host web server of the monitored website, as it will be further described with reference to Figure 5. As a consequence, the Company ID module 301 can communicate with computers and communication devices connected to the Internet through the network interfaces of the host web server.

With reference again to Figure 3, the instructions that the web activity monitoring device 300 is configured to perform will now be described for a visit of a visiting communication device 306 on a monitored website. As previously described, the web activity monitoring device 300 is configured to perform firstly an identification of the visiting communication device 306. Then, the web activity monitoring device 300 is configured to generate a visit log of the visits of the visiting communication device 306 on the monitored website.

### Identification of a visiting company :

A visitor of the visiting company, for example Company A, connects to the monitored website thanks to a visiting communication device 306.

The Company ID module 301 in the web activity monitoring device 300 receives a request 307 from the visiting communication device 306 of the visitor from the visiting company Company A. The request 307 is an HTTP request whose header comprises the IP address of the visiting communication device 306. Therefore, the Company ID module 301 receives the source IP address of the visiting communication device 306. The Company ID module 301 then queries the IP database 303 and the Company database 304 for retrieving a company identifier which is associated to the source IP address, in the case where the source IP address is registered in the IP database 303. For the sake of illustration, in the following example, the source IP address of the communication device 306 is registered in the IP database 303. For example, the visitor which uses the visiting communication device 306 connects to the monitored website from the corporate source IP address, for example from the corporate building of the company Company A. The visiting communication device 306 is for example a laptop.

Once the company to which the visitor of the visiting communication device 306 belongs is identified thanks to the source IP address, the Company ID module 301 is configured to generate a cookie 311 for the visiting communication device 306

The cookie 311 is a string of characters which is sent from the host web server of the monitored website to the browser of the visiting communication device 306, and is stored in the browser in order to be returned unchanged to the web server when the visiting communication device 306 connects again. Below is an example of the cookie 311 used for identifying the company Company A:
Name: Application
Content: "id=bb7b298b-02ac-48a8-8754-aaaa1ae1051f1&cid=6244&d=2015-06-09 11:06:03"
Domain: .application.com
Path: /
Send For: Any type of connection
Expires: 17 Aug 2016 11:40:50

The field "content" comprises an identifier id of the visitor: id=bb7b298b-02ac-48a8-8754-aaaa1ae1051f1, a cookie identifier cid of the company Company A: cid=6244 and the date: d=2015-06-09 11:06:03.

The Company ID module 301 sends a response 308 to the visiting communication device 306. The response 308 is an HTTP request whose header comprises the above described cookie 311 intended to the visiting communication device 306. Moreover, the cookie 311 is saved in the cookie database 305, as represented by arrow 309. The visiting communication device 306 then disconnects from the monitored website.

Later on, the visitor wants to visit again the monitored website or another monitored website. The visiting communication device 306 connects again to the monitored website, or to another monitored website handled by the Company ID module 301. In order to get the requested website, the visiting communication device 306 sends an HTTP request 310 to the host web server of the website. The HTTP request 310 comprises the cookie 311 whose company identifier is cid=6244 and whose visitor's identifier is id=bb7b298b-02ac-48a8-8754-aaaa1ae1051f1.

For example, the visitor goes back home, or goes to an hotel for a business trip, with the visiting communication device 306, which is a laptop, in order to keep on working on it. Therefore, the visiting communication device 306 uses another source IP address than the source IP address which is registered in the IP database 303 in association with the company identifier of the company Company A. So the Company ID module 301 cannot identify the visiting company thanks to the source IP address.

The Company ID module receives the cookie 311 and checks in the cookie database 305 which company is associated to the company identifier cid=6244. The Company ID module 301 identifies the visiting communication device 306 as a communication device of the company Company A.

### Generation of the visit record of the visit of the identified company on a monitored website:

Moreover, the Company ID module 301 comprises a visit logging module for generating history of the visits of the company Company A on the monitored website. The visit logging module comprises a visit history repository in which are stored visit records of the company Company A on the webpages of the monitored website.

The visit logging module also comprises a record counter of the visit records. The visit logging module is configured to increment the record counter when receiving an HTTP request from the visiting communication device 306, either by identifying the visiting communication device 306 thanks to the source IP address or thanks to the cookie 311. Therefore, the record counter is incremented when the Company ID module 301 receives the request 307 and incremented again when the Company ID module 301 receives the request 310.

The visit logging module is configured to store in the visit history repository the details of each visit of the company:
- the source IP address, registered or not in the IP database,
- the date of the request,
- the delay of visit on a webpage,
- which webpage of the monitored website has been visited,
- the geolocalization of the visiting communication device of a visitor of the
   visiting company Company A,visiting communication device.Now, with reference to Figure 5, it will be described how the web activity monitoring device 300 can generate an history of the visits on a monitored website which is visited by different companies. The elements which are similar to those of Figure 3 are referenced by the same numerals.

Figure 5 represents a plurality of host web servers 504, 505 and 506 which host monitored websites X, Y, Z and W. The monitored websites are all equipped with a tag manager 500 which is part of the Company ID module 301.

Several visiting communication devices 306, 507, 508 and 509 are represented. For example, the visiting communication devices 306, 507 and 509 belongs to visitors of the company Company A and the visiting communication device 508 belongs to a visitor of the company Company C. Three different geographical locations are represented by dotted-lined circles 501, 502 and 503.

For the sake of illustration, visits on a monitored website Y by visitors of two different companies will now be described. A visiting communication device 507 connects to the monitored website through the tag manager 500, as represented by arrow 510. Another communication device 508 connects to the monitored website Y through the tag manager 500 of the monitored website, as represented by arrow 511. The tag manager is an interface between the company ID module 301 and the web activity monitoring device 300. For example, arrow 512 shows the tag manager 500 of the monitored website Y sending a cookie 513 to the visiting communication device 508. The web activity monitoring device 300 first identifies the visiting company for each visiting communication device and then collects two visit records of visits on the monitored website Y. The first visit record is a record of the visit of the company Company A and the second visit record is a record of the visit of the company Company C.

For the sake of illustration, visits on different monitored websites X, Y and W by visitors of the company Company A will now be described. The visiting communication device 306 connects to the monitored website X through the tag manager 500, as represented by arrow 307. Another visiting communication device 507 connects to the monitored website Y through the tag manager 500 of the monitored website Y, as represented by arrow 510. A last visiting communication device 509 connects to the monitored website W through the tag manager 500 of the monitored website W. The three visiting communication devices 306, 507 and 509 are all communication devices of visitors from the company Company A.

The web activity monitoring device 300 comprises distributed parts of the host web servers which host the monitored websites. The distributed parts are the tag managers 500. The respective tag manager 500 of the three monitored websites X, Y and W enable the web activity monitoring device 300 to collect visit records of visits of the company Company A on the respective monitored website X, Y and W. Each respective monitored website disposes of a respective visit record of the respective visiting communication device which connects to the respective monitored website.

Alternatively, the web activity monitoring device 300 comprises an access to the host web servers of each monitored website.

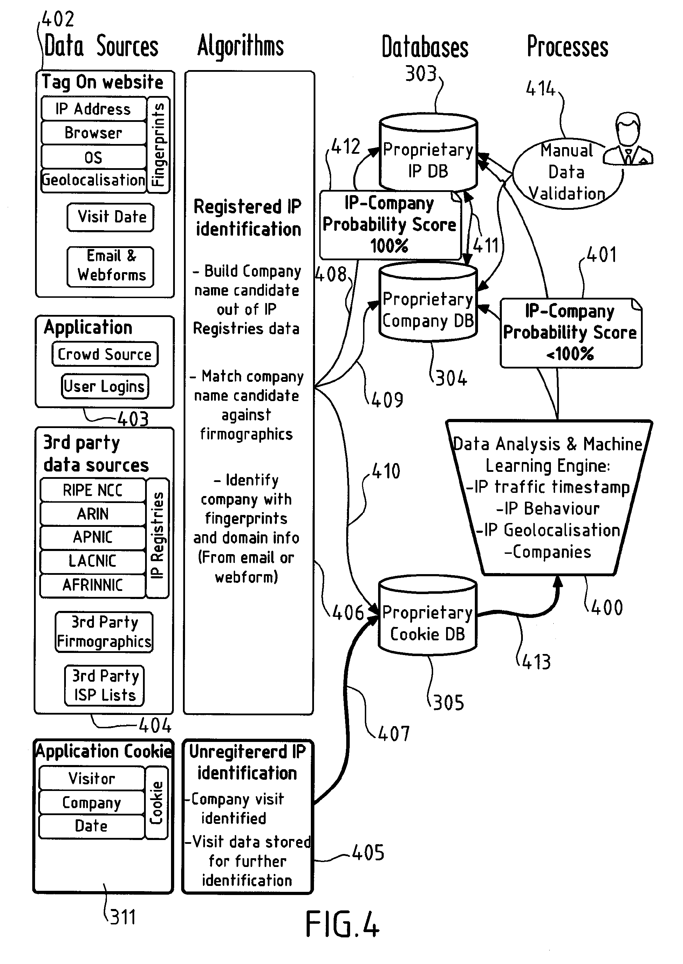

The visit records are all collected and stored in the web activity monitoring device 300 in order to enrich the IP database 303 and the company database 304, as it will now be described with reference to Figure 4.

### Generation of the databases of the web activity monitoring device 300.

Figure 4 represents the databases of the web activity monitoring device 300. The elements which are similar to those of Figure 3 are referenced by the same numerals. The generation of the databases will now be described.

When a request is received in the web activity monitoring device 300 from a visiting communication device 306 having a source IP address which is not registered in the IP database 303, the web activity monitoring device 300 searches for external content in a plurality of different sources:
- **A first source of external content consists of tags 402 stored on the monitored website.**

For example, the monitored website is equipped with a tracking pixel in order to enable interaction between the visiting communication device 306 of the visiting company and the web activity monitoring device 300. The tracking pixel is a script that retrieves all fingerprints information of the visiting communication device 306. For example, the script may be written as follows: 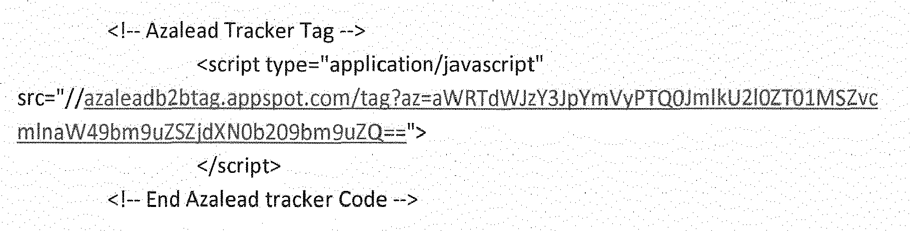
- Fingerprints of a visiting communication device are analyzed, which comprise:
   o a geographical localization attached with the IP address of domain name attached to the visiting communication device. For example, the geographical localization of a visiting communication device may correspond to the location of a corporate building of the corresponding visiting company.
   ∘ a configuration of the browser of a visiting communication device, including for example:
      ▪ the browser version,
      ▪ the operating system version,
      ▪ the language setup,
      ▪ the time zone setup,
      ▪ the font setup,
      ▪ the plugin setup,
      ▪ the platform version,
      ▪ the cookies use setup,
      ▪ the screen resolution setup.
- Information as company names, email addresses or other information directly inputted from a visiting communication device in a webform on any monitored website, and records of interaction with an email received from an IP address of the visiting communication device,
- visit dates when any monitored website receives the visit of a visiting communication device. For example the visits of a visiting communication device always occur in working hours, meaning that the visiting communication device is likely to be a visiting communication device of a visiting company, for business purpose.
- **A second source of external content consists of application source 403.** The corresponding external content is all data registered from application users, i.e. users of the application providing the web service of monitoring the websites of the users. For example, the web activity monitoring device 300 monitors a plurality of monitored websites belonging to a plurality of monitored companies. The companies which website is monitored are registered by the application provider in association with source IP addresses and cookies. Therefore, a first monitored company may be a visiting company of a second monitored company. The web activity monitoring device 300 identifies the visiting company whose source IP addresses and cookies are already stored in the databases 303 and 305.
- **A third source of external content consists of third party data sources 404.** For example, the American Registry for Internet Numbers (ARIN) is one of five Regional Internet Registries (RIRs) providing Internet resource allocations, registration services and coordination activities. The web activity monitoring device 300 can access the ARIN to retrieve IP addresses in relation, for example, with geographical locations. Other registries are available: RIPE NCC, APNIC, LACNIC, AFRINNIC. The web activity monitoring device 300 can also access Network Information Center (NIC) to get information about domain names attached to the visiting communication devices of the visiting companies.

The Company ID module 301 of the web activity monitoring device 300 further comprises an IP matching module 406 for extracting from the external content of the first, second and third sources 402, 403 and 404 the identity of a visiting company when receiving a request of the visiting company.

The IP matching module 406 analyzes the source IP address of the request in order to determine the visiting company identity. Namely, the IP matching module 406 is configured to:
- build company name candidate out of registries data, i.e. out of Third party data sources 404 and Application source 403.
- match company name candidate against firmographics, i.e out of Third party data sources 404,
- identify company with fingerprints and domain info (from email or webform), i.e. out of Tag on Website 402 source.

All these information from external content are collected and stored in the databases 303, 304 and 305, as shown by arrows 408, 409 and 410. More precisely, when a source IP address is identified as the source IP address of a visiting company, the source IP address is stored in the IP database 303, as shown by the arrow 408, and the identity of the visiting company is stored in the company database 304, as shown by arrow 409. Moreover, an association is created between the source IP address and the identity of the visiting company, as shown by the arrow 411.

Two cases may be distinguished:
In a first case represented by the box 412, the source IP address and the identity of the visiting company are already associated in the Third party data sources 404. Therefore, the association is considered to be reliable. The reliability is saved in the memory by given a score of 100% to the association.

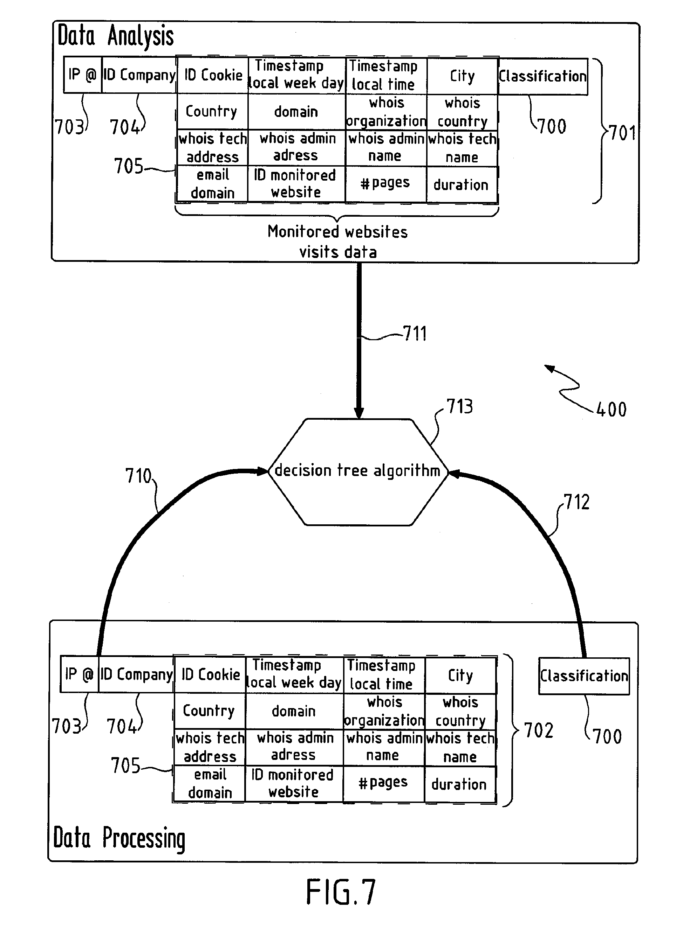

In a second case represented by the box 401, by contrast with the first case the identity of the visiting company corresponding to the source IP address is uncertain. Indeed, the source IP address and the identity of the visiting company are not already associated in the Third party data sources 404. In this case, the information are stored in the cookie database 305, as shown by arrow 410, and further analyzed by a data analysis and machine learning engine 400 in order to determine which identity of the visiting company is to be associated to the source IP address and to score the reliability of the association, as it will be further described with reference to Figure 7.

Further, the Company ID module 301 of the web activity monitoring device 300 also comprises a cookie matching module for identifying the visiting company identity by analyzing a received cookie.

The received cookie is a fourth source of external content which consists of **Application cookies database 311.** The cookies received by the web activity monitoring device 300 comprise information about the visit date and the visiting company, but also information about the visitor, which is supposed to be an employee of the visiting company using the visiting communication device.

All these information from cookies are collected and stored in the database 305, as shown by arrow 407.

The web activity monitoring device 300 further comprises a data analysis and machine learning engine 400 connected to the cookie database 305 in which are stored the previously described various external content. The connection is represented by an arrow 413.

The data analysis and machine learning engine 400 operates by building a model from example inputs in order to make data-driven predictions or decisions.

The data analysis and machine learning engine 400 analyses data patterns of the external content in relation with the source IP address of the visiting communication device and calculates the likelihood that the source IP address is an IP address used by a visiting company. The likelihood is a score calculated and stored in the databases 303 and 304 in association with the IP address and the companies

With reference now to Figure 7, the data analysis and machine learning engine 400 will be further described. The data analysis and machine learning engine 400 comprises a decision tree algorithm which is generated in a first step 711 and applied in a second step 710.

In a first step 711, identified visits dataset 701 are analyzed in order to generate an algorithm.

The visits dataset 701 comprises a plurality of visit records from the databases 303, 304 and 305. Each visit record comprises a source IP record 703, an identity of a candidate visiting company 704, a detailed visit record 705 and a score 700. The score 700 is also referred to as a classification, i.e. a quantification of the level of confidence that a source IP address belongs to the recorded candidate visiting company. The detailed visit record 705 comprises a plurality of information about the visit. For example, the detailed visit record 705 comprises:
- ID Cookie, i.e. a cookie identifier of the visiting communication device,
- Timestamp local week day, i.e. the date of the visit,
- Timestamp local time, i.e. the time of the visit,
- City, i.e. the city of the geographical location of the visiting communication device,
- Country, i.e. the country of the geographical location of the visiting communication device,
- domain, i.e. the domain associated with the visitor IP address (for example: companya.com),
- whois organization, i.e. an identifier of an IP register database from the Third party data sources 404 wherein the source IP address is retrieved, with or without an identified associated company,
- whois country, i.e. a source country of the above described whois organization,
- whois tech address, i.e. the second contact name in a whois response, wherein the whois response is a response of an IP register database when requested by the web activity monitoring device 300, the request being a request for a company identifier associated with a source IP address,
- whois admin address, i.e. the first contact address line 1 in the whois response,
- whois admin name, i.e. the first contact name in the whois response,
- whois tech name, i.e. the second contact address line 1 in the whois response,
- email domain, i.e. the domain part of the email address for email open actions,
- ID monitored website, i.e. an identifier of which visited monitored website in the set of monitored websites handled by the web activity monitoring device 300 has been visited by the visiting communication device in the recorded visit.
- # pages, i.e. an identifier of the visited webpage of the monitored website;
- duration, i.e. the time spent by a visitor on the visited webpage,

The source IP addresses 703 are retrieved from the IP database 303, the identifiers 704 of the visiting companies are retrieved from the company database 304 and the visit details 705 are retrieved from the cookie database 305.

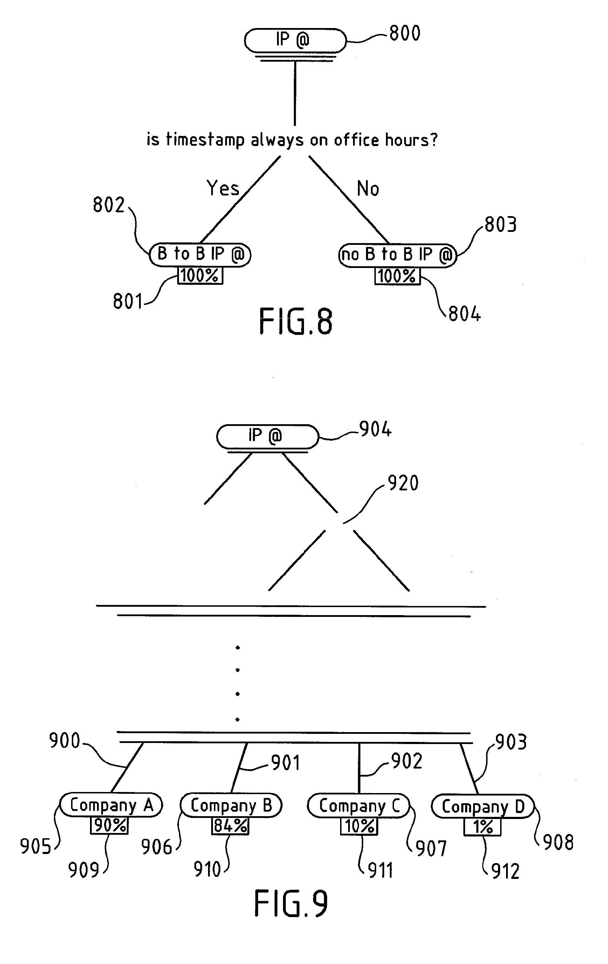

The visits dataset 701 are used as a data sample in order to retrieve data schemes, or patterns for elaborating a classification algorithm. For example, a data scientist analyses the identified visits data in order to build a decision tree algorithm 713 for classifying the associations of source IP addresses and identities of candidate visiting companies. A decision tree is a predictive model which maps observations about an item to conclusions about the item's target value. The decision tree algorithm 713 is a model that predicts the value of a target variable, i.e. the score 700 given to an association of the source IP address to an identifier of a company, based on several input variables, i.e. the content of the detailed visit record 705. As represented on the example of Figure 9, the decision tree algorithm 713 comprises edges 900, 901, 902 and 903 to children for each of the possible values of an input variable, for example the input variable 920. For example, the input variable 920 represents timestamp possible values. Each leaf represents a value 905, 906, 907 and 908 of the target variable given the values of the input variables represented by the path from the root to the leaf. Each leaf of the tree is labeled with a class or a probability distribution 909, 910, 911, 912 over the classes.

In the second step 710 of Figure 7, the data analysis and machine learning engine 400 is configured to apply to incoming visit records 702 the decision tree algorithm 713 which has been defined in the first step. Incoming visit records 702 are retrieved from the databases 303, 304 and 305. These visit records 702 are scored by the decision tree algorithm 713, as represented by the arrow 712, and the calculated score 700 is further recorded in the cookie database 305.

Now, with reference to Figure 8, for the sake of illustration, a very simple decision tree algorithm will be described. A source IP address 800 is unknown from the database 303. The record of the visits details 705 recorded in association with the source IP address is analyzed by the algorithm. The algorithm determines a first result 802 in which the source IP address is an address belonging to a company for business to business purpose, with a score 801 associated to the result 802. The algorithm determines a second result 803 in which the source IP address is not an address belonging to any company, with a score 803 associated to the result 804. The algorithm selects between the first result 802 and the second result 803 as a function of the timestamp. When the timestamp corresponds to office hours, the algorithm selects the first result 802 in association with a score 801 of 100%.Figure 9 illustrates the decision tree algorithm 713 defined as described with reference to Figure 7. An unknown IP address 904 is analyzed, and the decision tree algorithm 713 associates the IP address to different candidate visiting companies as follows:
- Company A with a score of 90%,
- Company B with a score of 84%,
- Company C with a score of 10%,
- Company D with a score of 1%.

The scores are recorded and the identifier of the company having the best score, i.e. in this example Company A, is saved in association with the source IP address 904.

For example, it is probable that a source IP address from which a visiting communication device visits a monitored website out of office hours is not a source IP address of a company. Therefore, the score associated to the association between a candidate company and the source IP address is low.

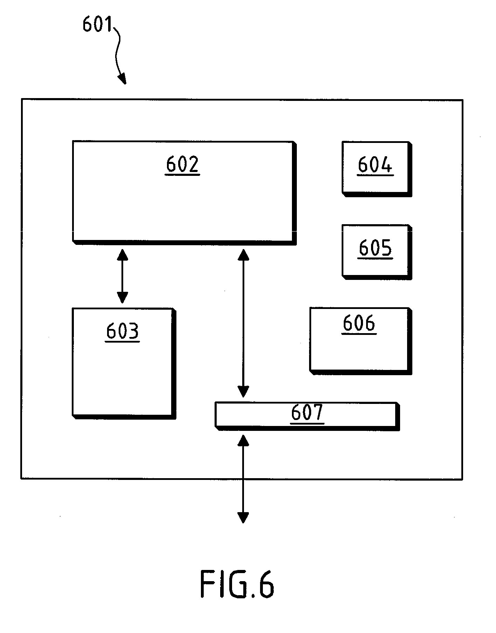

Figure 6 illustrates a computing device 601 which can be used for implementing any of the following: visiting communication devices, data analysis and machine learning engine 400, web activity monitoring device 300, company ID module 301 etc. The computing device 601 comprises a data repository 602 connected to a processing unit 603 and to a communication interface 607. The computing device 601 also comprises an input device 604, an output device 605 and an analog-to-digital and/or digital-to-analog converter 606. In embodiments, the input device 604 is a mouse, a joystick, a touch screen, a voice recorder etc. In embodiments, the output device 605 is a display device such as a two-dimensional screen or a three-dimensional screen. Alternatively, the output device 605 is a loudspeaker, or a Braille computer display, speech synthesizer etc. The communication interface 607 is connected to other devices and/or to the internet in various possible manners, in a wired manner and/or in a wireless manner, e.g. Wifi, Bluetooth, etc.

The visiting communication devices hereinabove described may any of the following: laptops, personal computers, digital tablets, smartphones, etc.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

The invention may be implemented by means of hardware as well as software. The same item of hardware may represent several modules.

The visiting communication devices, data analysis and machine learning engine 400, web activity monitoring device 300, Company ID module 301 described hereinabove may be implemented through the use of dedicated hardware as well as hardware capable of executing software in association with appropriate software. When provided by a processor, the corresponding functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, central processing unit (CPU), digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included. The visiting communication devices, data analysis and machine learning engine 400, web activity monitoring device 300, Company ID module 301 described hereinabove may be implemented in a unitary manner or in a distributed manner.

In the claims, any reference signs placed between parentheses shall not be construed as limiting the scope of the claims.

## Claims

1. A web activity monitoring device (300) for generating visit logs of organizations on a monitored website (Y) having a webpage, the web monitoring device comprising:
• a matching data repository in which is stored:
o a set of organization identifiers (303),
o a set of browser identifiers (304),
o a browser association (411), wherein the browser association links a browser identifier to an organization identifier,
• an input interface configured to:
o receive a request from a web client device (306), wherein the request comprises a browser identifier and a destination webpage of the request,
• an organization identifying module (301) configured to:
o retrieve from the matching data repository (303, 304) a browser association, wherein the browser association links the browser identifier of the web client device to an organization identifier,
o retrieve the organization identifier, and
• a visit logging module (305) comprising:
o a clock configured to retrieve a visiting date when the request is received, and
o a visit history repository, the visit logging module being configured to store the retrieved visiting date and the destination webpage of the request in association with the retrieved organization identifier in the visit history repository in order to generate history of the visits of an organization on the destination webpage,
• an output interface (100) for accessing the history of the visits.

2. The web activity monitoring device according to claim 1, wherein the request comprises a cookie (311) comprising the browser identifier, the browser identifier being a cookie identifier, and the browser association being a cookie association, wherein the cookie association links the cookie identifier to the organization identifier, wherein:
• the matching data repository (303, 304, 305) further stores:
o a set of network addresses,
o a plurality of network associations, an network association being a link between an organization identifier and an network address,
• the web activity monitoring device further comprising a web server (504) configured to perform operations comprising:
o receiving a request (307) from a web client device, wherein the request comprises a source network address,
o retrieving the network address in the matching data repository, then
o sending a cookie (311) to the web client device, wherein the cookie comprises a cookie identifier,
o retrieving from the matching data repository (303, 304, 305) an network association, wherein the network association links the network address of the web client device (306) to an organization identifier, and
o retrieving the organization identifier,
o further storing in the matching data repository (303, 304, 305) the cookie identifier, and
o generating a cookie association, wherein the cookie association links the cookie identifier to the organization identifier for creating associations between cookie identifiers and organization identifiers.

3. A web activity monitoring device according to claim 2, further comprising a matching module (405, 406) comprising:
• an input interface configured to receive a request (307) from a web client device (306), wherein the request comprises an network address of the web client device,
• an output interface for sending a request for external content (402, 403, 404) in relation with the web client device (306), wherein the input interface of the matching module (405, 406) is further configured to receive a response comprising the external content, and
• an association processor module configured to:
o determine a candidate organization identifier as a function of the external content,
o generate an network association, the network association being a link between the candidate organization identifier and the network address,
o store in the matching data repository (303, 304) the network address of the web client device, the candidate organization identifier and the network association.

4. The web activity monitoring device according to claim 3, wherein the external content is an element or a combination of elements selected in the group consisting of:
• an organization name from an network registry in which are stored organization names in relation with corresponding network addresses,
• a date when receiving the request from the web client device,
• a geographical localization attached with the network address of the web client device,
• a record of an interaction with an email, wherein the network address from which the email was received is the network address of the web client device,
• a domain name attached with the network address of the web client device,
• character strings inputted in a webform on a web site,
• a tracking pixel interaction on a web site,
• a configuration of a web client device, wherein the configuration of the web client device comprises an element or a combination of elements in the group consisting of:
o a browser version,
o an operating system version,
o a language setup,
o a time zone setup,
o a font setup,
o a plugin setup,
o a platform version,
o a cookies use setup,
o a screen resolution setup.

5. The web activity monitoring device according to claim 4, wherein the external content is stored in the matching data repository (305) in association with the candidate organization identifier.

6. The web activity monitoring device according to claim 5, wherein the external content is a combination of elements, wherein each element has a value selected between different values such that the external content related to the request is a n-tuple of values,
the association processor module is further configured to operate a classification tree algorithm (400), the classification tree algorithm being configured to predict for a n-tuple of values a probability of association of the browser identifier with the candidate organization identifier.

7. The web activity monitoring device according to claim 6, further comprising a scoring module (400) configured to:
• generate an network score for the network association as a function of the probability,
• store in the matching data repository (401) the generated network score, wherein the network score quantifies the reliability of the network association.

8. The web activity monitoring device according to claim 7, wherein the web server (504) is further configured to send the cookie (311) to the web client device (306) when the network score is above a threshold.

9. The web activity monitoring device according to claim 7 or 8, wherein the reliability of the network association is further analyzed by a machine learning function (400) taking into account the history of the visits of an organization in correlation with the external content associated to the candidate organization identifier, in order to modify the network score.

10. The web activity monitoring device according to any one of claim 2 to claim 9, further configured to:
o generate a cookie score for the cookie association, as a function of the reliability of the cookie association,
o store in the matching data repository the generated cookie score,
o access the cookie score in the matching data repository, and
o further analyze the reliability of the cookie association by a machine learning function taking into account the history of the visits of an organization in correlation with the external content associated to the candidate organization identifier, in order to modify the cookie score.

11. The web activity monitoring device according to any one of claims 1 to 10, wherein the organization identifier is selected in the group consisting of:
o a corporate name of a company,
o a legal name of a company,
o a registered name of a company,
o a registered number of a company,
o a trademark, a name of a society,
o a name of an organization,
o a name of an administration entity.

12. A web activity monitoring device according to claim 1, wherein the browser identifier is a browser fingerprint comprising an element or a combination of elements in the group consisting of:
o a browser version,
o a operating system version,
o a language setup,
o a time zone setup,
o a font setup,
o a plugin setup,
o a platform version,
o a cookies allowance setup,
o a screen resolution setup.

13. A computer-implemented method for generating visit logs of organizations on a webpage hosted in a web server, comprising:
o receiving from a web client device a request (307) comprising a browser identifier and a destination webpage of the request,
o retrieving from a matching data repository a browser association, wherein the browser association links the browser identifier of the web client device to an organization identifier,
o retrieving the organization identifier,
o retrieving from a clock a date when the request is received, and
o storing in a visit history repository the retrieved date and the destination webpage of the request in association with the retrieved organization identifier in order to generate history of the visits of an organization on the destination webpage.

14. A computer-implemented method according to claim 13, wherein the request comprises a cookie comprising the browser identifier, the browser identifier being a cookie identifier, and the browser association being a cookie association, wherein the cookie association links a cookie identifier to an organization identifier, the method further comprising:
o sending to a web server an instruction for generating (513) a cookie comprising a cookie identifier when the web server receives a request from a web client device, wherein the request comprises an network address of the web client device,
o receiving from the web server the network address of the web client device,
o retrieving the network address in the matching data repository, then
o sending to the web server an instruction for sending the cookie to the web client device,
o retrieving from the matching data repository an network association, wherein the network association links the network address of the web client device to an organization identifier, and retrieving the organization identifier,
o storing in the matching data repository the cookie identifier, and generating a cookie association, wherein the cookie association links the cookie identifier to the organization identifier.

15. A computer program comprising computer-executable instructions that perform all the steps of the method according to claims 13 and 14 when executed.
